# EUROPEAN PATENT APPLICATION

(11) **EP 4 539 226 A1**
(43) Date of publication of application: **16.04.2025**
(21) Application number: 24205881.6
(22) Date of filing: 10.10.2024
(51) Int. Cl.: H01M 50/213, H01M 50/503, H01M 50/507, H01M 50/509

(54) **BATTERY MODULE AND ELECTRIC DEVICE**

(30) Priority: 13.10.2023 CN 202322758376 U; 13.10.2023 CN 202311329307; 13.12.2023 WO PCT/CN2023/138331
(71) Applicant: Eve Energy Co., Ltd., Huizhou, Guangdong 516006 (CN)
(72) Inventor: CHEN, Jingcong, Huizhou, Guangdong 516006 (CN)
(74) Representative: Murgitroyd & Company

(57) **Abstract**

The present application discloses a battery module, the battery module including at least three cell rows (10) parallel to each other, where any two adjacent cell rows are staggered. A busbar (22) includes the following conductive mechanisms: a first connector (221), a second connector (222), and a plurality of first conductive bars (201) and a plurality of second conductive bars (202) located therebetween and arranged side-by-side in a first direction and alternating with each other; each conductive bar comprises at least three conductive units (220) and a connector (223), and each conductive unit corresponds to one cell (111); in each conductive bar, two adjacent conductive units are connected to electrodes (120) with opposite polarities, and two spaced conductive units are connected to electrodes with same polarity. Two electrodes of each cell are connected to any two adjacent conductive mechanisms in the busbar.

## Description

### TECHNICAL FIELD

The present application relates to battery technology, and in particular to a battery module and an electric device.

### BACKGROUND

With the continuous development of power battery technology, battery modules generate a significant amount of heat during operation and also expand to some extent due to the influence of heat. A battery module typically includes a cell assembly and a busbar. The busbar connects the cells within the cell assembly, enabling the positive and negative output terminals of the cell assembly to supply power to electric devices.

### SUMMARY

In the related art, the busbar usually occupies a large area, which is not conducive to heat dissipation in the battery module. Moreover, the busbar expands when heated, which is prone to causing damage and affecting the service life of the busbar. According to various embodiments, it is provided a battery module and an electric device.

The present application provides a battery module, the battery module including a cell assembly and a busbar. The cell assembly having a positive output terminal and a negative output terminal, the cell assembly including at least three cell rows parallel to each other, each of the cell rows including a plurality of cells arranged along a first direction, any two adjacent ones of the at least three cell rows are staggered, and each of the cells including two electrodes of opposite polarities; and the busbar electrically connected to the two electrodes of each of the cells of the at least three cell rows, the busbar including: a first connecting member, a second connecting member, and a plurality of first conductive bars and a plurality of second conductive bars disposed between the first connecting member and the second connecting member, the first connecting member being connected to the positive output terminal, the second connecting member being connected to the negative output terminal, the plurality of first conductive bars and the plurality of second conductive bars being arranged side-by-side along the first direction respectively, and the plurality of first conductive bars and the plurality of second conductive bars alternating with each other; wherein each of the first conductive bars and the second conductive bars includes at least three conductive units disposed along a second direction and a connector connecting the at least three conductive units, each of the conductive units corresponds to one of the cells, and the second direction is perpendicular to the first direction; in the at least three conductive units of each of the first and second conductive bars, two adjacent ones of the conductive units correspond to two of the cells and connect two of the electrodes of the two cells which are of opposite polarities, and two spaced ones of the conductive units correspond to two of the cells and connect two electrodes of the two cells which are of the same polarity; wherein, for the same cell, one of the electrodes of each cell is connected to a first conductive mechanism, and another electrode of the cell is connected to a second conductive mechanism, and the first conductive mechanism and the second conductive mechanism for the cell are any two adjacent ones of the first connecting member, the second connecting member, the plurality of first conductive bars, and the plurality of second conductive bars.

The present application also provides an electric device including the battery module as described above.

### BENEFICIAL EFFCT

The beneficial effect of the present application is as follows: the present application provides a battery module in which two electrodes of each cell are connected to the first conductive mechanism and the second conductive mechanism respectively, so that a relatively large gap can be formed between two conductive mechanisms connected to two adjacent cells in a first direction, thereby providing more space for the expansion of the conductive mechanisms when heated, which avoids possible fatigue of the conductive bars during thermal expansion, and therefore extends the service life of the busbar. Additionally, due to the staggered arrangement of the cell rows in the cell assembly, the connection points of the busbar to the cells are also in a staggered arrangement. This not only facilitates the connection between the busbar and the cells, but also provides relatively large gaps between the connection points of the busbar to the cells, which is conducive to the heat dissipation of the busbar. On the other hand, the cells connected by the same conductive bar are connected in series, and the cells connected by adjacent conductive bars are also connected in series, forming a zigzag series connection. Such connection may allow, with the same spatial arrangement, a greater number of cells to be connected in series, thereby ensuring that the battery module has a higher output voltage.

The electric device provided by the present application, due to its inclusion of the aforementioned battery module, therefore has an extended service life and is capable of achieving a higher output voltage.

### BRIEF DESCRIPTION OF THE DRAWINGS

FIG. 1 is the three-dimensional schematic diagram of the battery module provided by some embodiments;
FIG. 2 is the exploded schematic diagram of the battery module provided by some embodiments;
FIG. 3 is the schematic structural diagram of the portion of the battery module provided by some embodiments;
FIG. 4 is the schematic structural diagram of the busbar provided by some embodiments;
FIG. 5 is the schematic structural diagram of the busbar provided by some embodiments;
FIG. 6 is the schematic structural diagram of the first conductive bar provided by some embodiments;
FIG. 7A is the schematic structural diagram of the portion of the battery module provided by some other embodiments;
FIG. 7B is the schematic structural diagram of the portion of the battery module provided by yet some other embodiments;
FIG. 8 is the schematic structural diagram of the portion of the battery module provided by yet some other embodiments;
FIG. 9 is the schematic structural diagram of the portion of the battery module provided by yet some other embodiments;
FIG. 10 is the schematic structural diagram of the portion of the battery module provided by yet some other embodiments;
FIG. 11 is the schematic structural diagram of the busbar assembly provided by some embodiments.

### Illustration of the reference labels:

10. cell row; 11. support; 21. output terminal connector; 22. busbar; 23. FPC; 24. first insulating film; 25. second insulating film; 100. cell assembly; 101. first cell row; 102. second cell row; 103. third cell row; 104. fourth cell row; 111. cell; 112. connecting portion; 113. limiting portion; 114. cavity; 115. opening; 120. electrode; 121. negative electrode; 122. positive electrode; 130. holding space; 200. busbar assembly; 201. first conductive bar; 202. second conductive bar; 204. fusing structure; 205. thermistor; 211. slot; 214. high-voltage cable; 220. conductive unit; 221. first connecting member; 222. second connecting member; 223. connector; 300. support assembly; 1000. battery module; 1111. first cell; 1112. second cell; 1113. third cell; 1115. fourth cell; 1116. fifth cell; 1131. recess; 1311. connector tab; 1312. terminal tab; 2020. connecting edge; 2021. first connecting edge; 2022. second connecting edge; 2201. first conductive unit; 2202. second conductive unit; 2203. third conductive unit; 2204. fourth conductive unit; 2230. sub-connector; 2231. first sub-connector; 2232. second sub-connector; 2233. third sub-connector.

### EMBODIMENTS OF THE INVENTION

A battery module typically includes a cell assembly and a busbar assembly, and the cell assembly includes a number of cells. By connecting output terminals of each cell in the cell assembly to a busbar in the busbar assembly, the cell assembly is capable of supplying power to an electric device.

In related technology, the busbar includes a number of conductive bars arranged in sequence, each conductive bar usually occupies a large area, and the cell will produce a large amount of heat during operation, where the heat conducted to the conductive bar will cause the conductive bar to deform. Due to the large area of the conductive bar, the conductive bar must overcome a large force in the deformation, which may lead to fatigue of the conductive bar, affecting its service life.

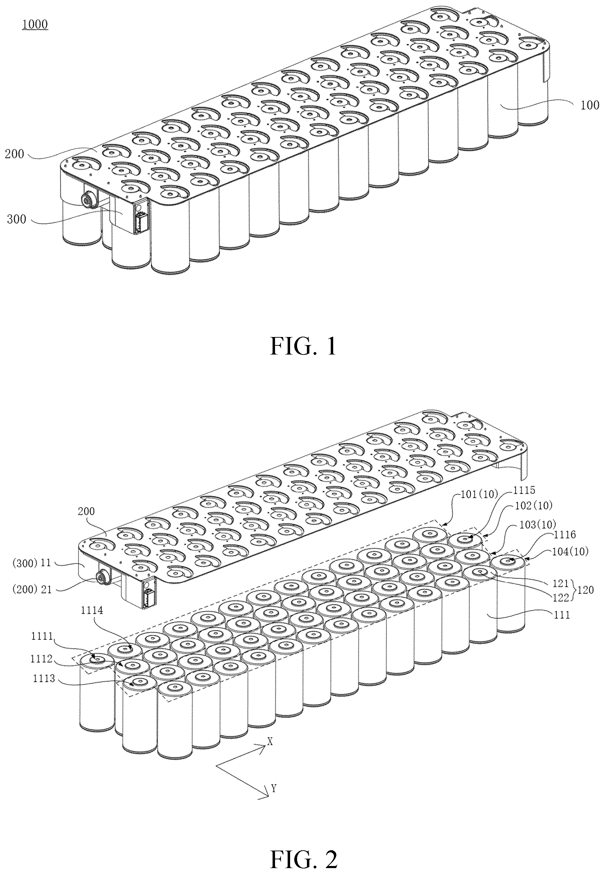

Based on the above, as shown in FIG. 1, some embodiments of the present disclosure provide the battery module 1000 that includes the cell assembly 100 and the busbar assembly 200.

As shown in FIGS. 1 and 2, the cell assembly 100 has a positive output terminal and a negative output terminal, and the cell assembly 100 includes at least three cell rows 10 that are parallel to each other. In the at least three cell rows 10 (i.e., all of the cell rows 10), each cell row 10 includes a plurality of cells 111 arrayed along a first direction X. Wherein, each of the cells 111 includes two electrodes 120 with opposite polarities. Exemplarily, each cell 111 includes the negative electrode 121 and the positive electrode 122.

In some examples, the number of the cells 111 included in each cell row 10 may be equal, i.e., adjacent or spaced cell rows 10 all include the same number of cells.

In some examples, the spaced cell rows 10 are arranged side-by-side.

It is noted that the plurality of (spaced) cell rows 10 are arranged side by side, i.e., at least one end of each of the plurality of cell arrays 10 is located in the same straight line. Exemplarily, the cells 111 (e.g., the cells indicated by labels 1111 and 1113 in FIG. 2) at same end (any one of the two ends, i.e., the starting end and the finishing end, which will be named as first and second ends herein after) of each of the plurality of cell rows 10 in the first direction X are located in the same straight line. Only four cell rows 10 are illustrated in FIG. 2, and it will be appreciated that when there are three cell rows 10 arranged side-by-side, the three cells 111 located at the same end of the three cell rows 10 in the first direction X are located in the same straight line.

In some examples, please continue to refer to FIG. 2, the straight line where the ends of the plurality of cell rows 10 is located (e.g., the straight line where the two cells indicated by the labels 1111 and 1113 are located) extends along a second direction Y, and the second direction Y is perpendicular to the first direction X. That is, there is an angle of roughly 90° between the second direction Y and the first direction X. For example, the angle may be 85° , 88° , 90° , 92° , 95° , and the like.

Since each of the spaced cell rows 10 includes the same number of cells 111, the ends of the plurality of cell rows 10 are located in two different straight lines that are parallel to each other.

In the above-described at least three cell rows 10 (i.e., all the cell rows 10), any two adjacent cell rows 10 are staggered. Exemplarily, in two adjacent cell rows 10, the first end of one cell row 10 is spaced from the first end of another cell row 10 in the first direction X by a distance greater than 0. The first ends of the different cell rows 10 described above are all located at same end in the first direction X.

For example, the above distance is half of the center distance between two adjacent cells 111 in the same cell row 10, i.e., the distance between the first end of one cell row 10 and the first end of an adjacent cell row 10 in the first direction X is equal to half of the center distance between two adjacent cells 111 in one of the cell rows. At this point, as shown in FIG. 2, the cell labeled 1112 is located on the axis of symmetry of the cells labeled 1111 and 1114, which allows the two adjacent cell rows 10 to form a good staggered arrangement.

In some examples, the cells 111 are all cylindrical cells, which then allows one cell row 10 to somewhat fill the gaps between adjacent cells 111 in an adjacent cell row 10, thereby contributing to optimized spatial utilization of the cell assembly 100.

By arranging all the cell arrays 10 in a combination of staggered and side-by-side settings, the spatial utilization of the cell assembly 100 may be optimized, making the spatial utilization of the cell assembly 100 more sufficient and effective. In addition, the staggered arrangement of the two cells 111 allows a larger operating space between the two cells 111 in the process of connecting them with the busbar of the busbar assembly, which is conducive to improving the connection success rate and connection stability of the cells 111.

In some examples, as shown in FIG. 2, the negative electrode 121 and the positive electrode 122 of the cell 111 are disposed at the same end of the cell 111, and the negative electrode 121 and the positive electrode 122 are staggered in a length direction of the cell 111, which is conducive to avoiding the interference between the negative electrode 121 and the positive electrode 122 when the negative electrode 121 and the positive electrode 122 are connected to the busbar respectively.

Exemplarily, one end of the cell 111 has a terminal, the positive electrode 122 is disposed at the end of the terminal away from the cell 111, and the negative electrode 121 is disposed in a plane on the side of the cell 111 provided with the terminal. This can realize the staggered arrangement of the negative electrode 121 and the positive electrode 122 in the length direction of the cell 111, thereby facilitating the connection between the electrodes 120 and the busbar as described above.

Exemplarily, the positive electrode 122 has a circular surface and the negative electrode 121 has an annular surface.

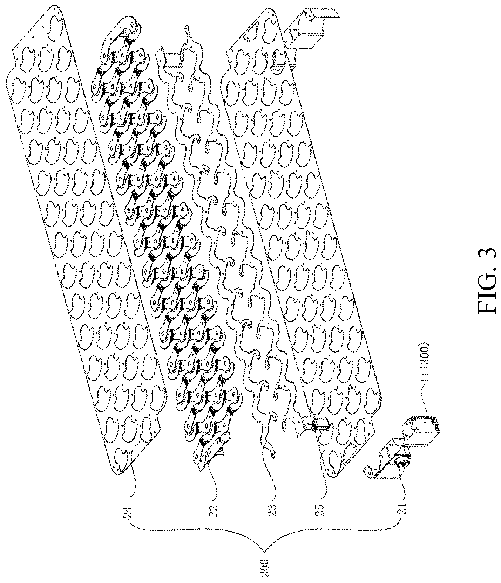

In some embodiments, as shown in FIG. 3, the busbar assembly 200 includes the busbar 22 configured to be electrically connected to the two electrodes of each cell 111 of all the cell rows 10.

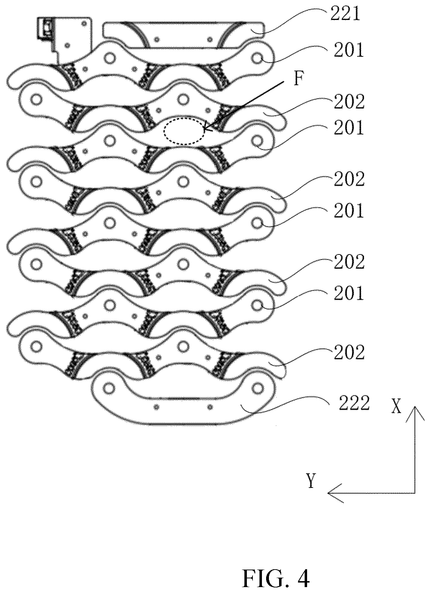

As shown in FIGS. 4-5, the busbar 22 includes the following conductive mechanisms: the first connecting member 221, the second connecting member 222, and a plurality of first conductive bars 201 and a plurality of second conductive bars 202 disposed between the first connecting member 221 and the second connecting member 222. The first connecting member 221 is connected to the positive output terminal, and the second connecting member 222 is connected to the negative output terminal. The plurality of first conductive bars 201 are arranged side-by-side along the first direction X, and the plurality of second conductive bars202 are likewise arranged side-by-side along the first direction X. The plurality of first conductive bars 201 and the plurality of second conductive bars202 are provided in an alternated arrangement, i.e., one second conductive bar 202 is provided between and spaced apart from any two adjacent first conductive bars 201 and one first conductive bar 201 is provided between and spaced apart from any two adjacent second conductive bars 202.

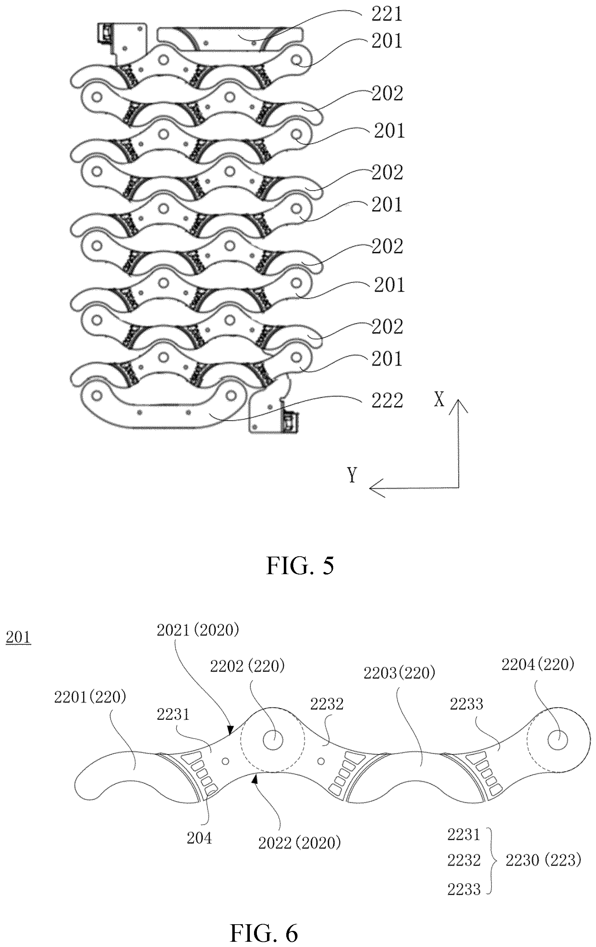

As shown in FIG. 6, each of the first conductive bars 201 and each of the second conductive bars 202 include at least three conductive units 220 disposed along the second direction Y, respectively, and the connector 223 connecting the at least three conductive units 220, wherein each of the conductive units 220 corresponds to a cell 111.

Exemplarily, FIG. 6 shows a structural diagram of the first conductive bar 201 of FIG. 4, and four conductive units 220 in the conductive bar are shown in FIG. 6, which are, in order, the first conductive unit 2201, the second conductive unit 2202, the third conductive unit 2203, and the fourth conductive unit 2204, and which are connected by the connector 223.

For any one of the above conductive bars (the first conductive bar 201 or second conductive bar 202), in the at least three conductive units 220, two adjacent conductive units 220 connect two electrodes 120 of opposite polarities of the corresponding cells 111. Exemplarily, for two adjacent conductive units 220 (e.g., the first conductive unit 2201 and the second conductive unit 2202), one conductive unit 220 (e.g., the first conductive unit 2201) connects the negative electrode 121 of its corresponding cell 111, and the other conductive unit 220 (e.g., the second conductive unit 2202) connects the positive electrode 122 of its corresponding cell 111.

In any one of the above conductive bars (the first conductive bar 201 or the second conductive bar 202), two spaced ones of the at least three conductive units 220 connect two electrodes 120 of the same polarity of the corresponding cells 111. Exemplarily, in two conductive units 220 spaced apart from each other (e.g., the first conductive unit 2201 and the third conductive unit 2203), one conductive unit 220 (e.g., the first conductive unit 2201) connects the negative electrode 121 of its corresponding cell 111, and the other conductive unit 220 (e.g., the second conductive unit 2203) connects the negative electrode 121 of its corresponding cell 111.

In a same cell 111, one electrode (e.g., the anode) of the cell 111 is connected to the first conductive mechanism, and another electrode (e.g., the cathode) of the cell 111 is connected to the second conductive mechanism. The first conductive mechanism and the second conductive mechanism are any two adjacent ones of the first connecting member 221, the second connecting member 222, the plurality of first conductive bars 201 and the plurality of second conductive bars 202.

Exemplarily, in one of the cells 111 in the cell assembly 100 located at one end of the cell assembly in the first direction X, one electrode of the cell is connected to the first connecting member 221 and the other electrode is connected to the first conductive bar 201. Further exemplarily, in one of the cells 111 in the cell assembly 100 located at the other end of the cell assembly in the first direction X, one electrode of the cell is connected to the second connecting member 222, and the other electrode is connected to the second conductive bar 202. Further exemplarily, in one of the cells 111 in the cell assembly 100 located in the center, one electrode of the cell is connected to the first conductive bar 201 and the other electrode is connected to the second conductive bar 202.

Accordingly, in the battery module provided in some embodiments of the present disclosure, the two electrodes of each cell 111 are connected to a first conductive mechanism and a second conductive mechanism, respectively, and the first conductive mechanism and the second conductive mechanism are any two adjacent ones of the first connecting member 221, the second connecting member 222, the plurality of first conductive bars 201, and the plurality of second conductive bars 202, which allows relatively large gaps between two adjacent conductive mechanisms connected to two adjacent cells in the first direction X(such as the gap indicated by the dashed ellipse F in FIG. 4, and the gap shown in the figure is only a part of the gap between the two adjacent conductive mechanisms), such that the conductive mechanisms have enough space to expand when deforming under heat, which avoids the conductive bars from possible fatigue during thermal expansion, and thus prolongs the service life of the busbar. In addition, because the staggered arrangement of the cell rows 10 in the cell assembly 100, the connection points of the busbar 22 to each cell 111 are also staggered, which facilitates the connection between the busbar 22 and each cell 111, and additionally allows a longer distance between the connection points of the busbar 22 to each cell 111, which facilitates the dissipation of heat of the busbar 22.

In the above battery module, the cells 111 connected to the same conductive bar are connected in series with each other (e.g., a plurality of cells 111 connected to the first conductive bar 201 are connected in series with each other), and the cells 111 connected to two adjacent conductive bars are also connected in series (the cells 111 connected to the first conductive bar 201 are further connected in series with the cells 111 connected to the adjacent second conductive bar 202). Such serpentine series connection may allow, under the same spatial arrangement, a larger number of cells 111 to be connected in series, thereby ensuring that the battery module has a greater output voltage.

As shown in FIGS. 4-5, as an example, some embodiments of the present disclosure have the first conductive bar 201 arranged adjacent to the first connecting member 221, but it does not mean that the conductive bar arranged adjacent to the first connecting member 221 should be the first conductive bar 201, and in other examples, the conductive bar arranged adjacent to the first connecting member 221 may also be the second conductive bar202.

The conductive bar arranged adjacent to the second connecting member 222 may be a first conductive bar 201 or it may also be a second conductive bar 202, which is determined mainly based on the specific number of the first conductive bar(s) 201 and the number of the second conductive bar(s) 202. For example, as shown in FIG. 4, when the numbers of first conductive bars 201 and second conductive bars 202 are equal, in the case where one of the first conductive bars 201 is arranged adjacent to the first connecting member 221, the second connecting member 222 is arranged adjacent to one of the second conductive bars 202. As another example, as shown in FIG. 5, when the number of the first conductive bars 201 is greater than the number of the second conductive bars 202 by one, in the case where one of the first conductive bars 201 is arranged adjacent to the first connecting member 221, the second connecting member 222 is arranged adjacent to one of the first conductive bars 201.

In some embodiments, as shown in FIGS. 4-6, the at least three cell rows 10 (i.e., all the cell rows 10) include a first number of cell rows 10, and in a conductive bar (e.g., the first conductive bar 201 or the second conductive bar 202), the at least three conductive units 220 (i.e., all the conductive units 220) include the first number of conductive units 220, which first number is an even number greater than three.

In this case, two adjacent conductive bars (e.g., the adjacent first conductive bar 201 and second conductive bar 202) both include the same number of conductive units 220 connected to the positive electrodes of the cells 111 and the same number of conductive units 220 connected to the negative electrodes of the cells 111, and in this case the first conductive bar 201 and the second conductive bar 202 may be fabricated in the same size and shape, which may save the manufacturing cost of the conductive bars.

In some embodiments, as shown in FIG. 6, in any one of the conductive bars (the first conductive bar 201 or the second conductive bar202), the connector 223 includes a plurality of sub-connectors 2230, each of which is disposed between two adjacent conductive units 220, respectively. For example, the plurality of sub-connectors 2230 are the first sub-connector 2231, the second sub-connector 2232, and the third sub-connector 2233, wherein the first sub-connector 2231 is disposed between and connected to both of the first conductive unit 2201 and the second conductive unit 2202; the second sub-connector 2232 is disposed between and connected to both of the second conductive unit 2202 and the third conductive unit 2203; and the third sub-connector 2233 is disposed between and connected to both of the third conductive unit 2203 and the fourth conductive unit 2204.

Each sub-connector 2230 includes two connecting edges 2020 disposed opposite to each other with each connecting edge 2020 connecting two adjacent conductive units 220 at both ends, and the two connecting edges 2020 are disposed to recess toward each other. Such arrangement may expand the gap (such as the gap indicated by the dashed ellipse F in FIG. 4) between two adjacent conductive mechanisms corresponding to the two adjacent cells.

Exemplarily, each sub-connector 2230 includes a first connecting edge 2021 and a second connecting edge 2022, the first connecting edge 2021 being recessed toward the second connecting edge 2022, and the second connecting edge 2022 being recessed toward the first connecting edge 2021.

In some examples, the shape of each connecting edge 2020 is arcuate. Exemplarily, the first connecting edge 2021 and the second connecting edge 2022 are both arcuate, which on the one hand can make the surface of the recessed portions more uniform, avoiding it from scratch a hand grabbing it; on the other hand, it can also guarantee a larger space to be left, so that there is a larger gap between two adjacent conductive mechanisms corresponding to two adjacent cells.

In some embodiments, as shown in FIG. 6, each sub-connector is also provided with a fusing structure 204 (e.g., a fusing resistor), so that when a failure of a certain cell 111 results in an abnormal output current, the fusing structure 204 will blow, which breaks the circuit(s) between the cell 111 and its adjacent cell(s) 111, thereby avoiding damage to the other cell(s) 111 in the event of a failure of the cell 111. In some examples, the conductive unit 220 connected to the negative electrode of the cell 111 has a circular arc surface, and the area as well as the curvature of the circular arc surface is adapted to the circular negative electrode of the cell 111, so that the conductive unit 220 can be well electrically connected to the negative electrode.

In some examples, the conductive unit 220 connected to the positive electrode of the cell 111 has a annular surface with a middle hollowed portion of the circular surface corresponding to the center of the positive electrode, which allows the conductive unit 220 to be well electrically connected to the positive electrode.

In some examples, each of the conductive mechanisms in the busbar 22 (e.g., the first connector 221, the second connector 222, the first conductive bars 201, and the second conductive bars 202) is made of an aluminum material (e.g., AL1060-O state aluminum). Aluminum sheets have good electrical and thermal conductivity and can be well welded to the output terminals of the cells 111.

In some embodiments, as shown in FIG. 3, the busbar assembly 200 further includes an FPC 23 disposed on one side of the busbar 22, the FPC 23 being electrically connected to the busbar 22, and the FPC 23 being configured to collect information of each cell 111. Wherein, the FPC 23 is closer to the cell assembly 100 compared to the busbar 22. The collection of information of each cell 111 by the FPC 23 facilitates the monitoring and management of the operating state of the cells 111.

Exemplarily, the FPC 23 may be directly laminated to the busbar 22 and then the two are welded using an ultrasonic welding process, thereby realizing an electrical connection therebetween.

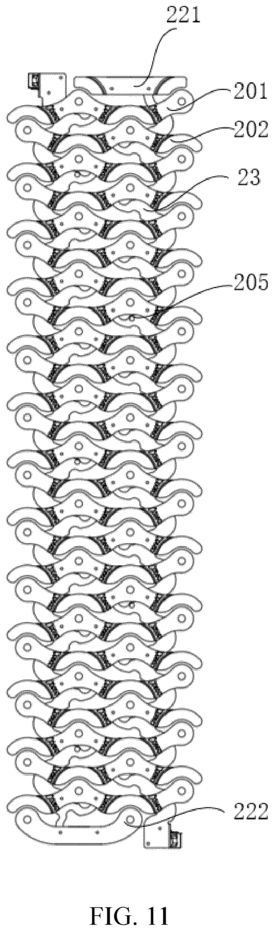

In some embodiments, as shown in FIG. 11, the busbar assembly 200 further includes a thermistor 205 disposed on the side of the FPC 23 away from the busbar 22 and electrically connected to the FPC 23, the thermistor 205 being configured to collect the temperature of the cells 111. The thermistor 205 may be directly welded to the side of the FPC 23 away from the busbar 22. Since the negative electrode 121 and the positive electrode 122 of same cell 111 are staggered in the height direction, there is a height difference between the negative electrode 121 and the positive electrode 122. The thermistor 205 itself has a certain thickness, so that the thermistor 205 can take advantage of the abovementioned height difference to be welded to the FPC 23 at one end, and has the other end disposed well close to the cell or in contact with the cell, so as to be able to more accurately and effectively sense and collect the temperature of the cell 111.

Exemplarily, the thermistor 205 may be disposed within the gap (such as the gap indicated by the dashed ellipse F in FIG. 4) between two adjacent conductive bars corresponding to two of the above-described cells 111, which may enable the thermistor 205 to have sufficient space to be arranged so as to facilitate the realization of effective collection of the temperature of the cells 111, and at the same time facilitate the relatively small size of the whole battery module.

In some examples, a plurality of thermistors are provided, each thermistor corresponding to one cell 111. In this way, the temperature of each cell 111 can be collected, thereby facilitating monitoring and management of the operating state of each cell 111.

In some examples, the thermistor(s) is an NTC thermistor (negative temperature coefficient thermistor), which not only has a small size that can be easily arranged in a small space in the battery module, but also has a small fluctuation in resistance value-temperature characteristics and a fast response to various temperature changes, and thus has a good temperature detection effect.

In some embodiments, as shown in FIG. 3, the busbar assembly 200 further includes a first insulating film 24 and a second insulating film 25, the first insulating film 24 is located on the side of the busbar 22 away from the FPC 23, and the second insulating film 25 is located on the side of the FPC 23 away from the busbar 22, and the first insulating film 24 and the second insulating film 25 are connected by hot pressing. Through hot pressing process, the first insulating film 24, the busbar 22, the FPC 23, and the second insulating film 25 are compressed into a single unit, thereby facilitating the subsequent connection between the busbar assembly 200 and the cell assembly 100.

At the same time, the busbar assembly 200 formed by the hot pressing process described above only needs to be die-cut, and there is no need for additional mold. For different projects, including the design of the busbar assembly and the need for mold maintenance and repair brought about by design adjustment and optimization and upgrading at a later stage of the project, it has the advantages of short development time and low development cost, saving the high cost of molds.

In some examples, the first insulating film 24, the busbar 22, the FPC 23, and the second insulating film 25 are each provided with positioning holes corresponding to each other, so as to facilitate a good alignment of the above components before hot pressing, thereby guaranteeing the success of the subsequent connection with the cell assembly.

In some examples, the first insulating film 24 and the second insulating film 25 are provided with apertures at positions corresponding to each of the cells 111, and exposing each of the connection points (e.g., the conductive units) of the busbar 22 to the cells 111, which facilitates subsequent welding between the busbar 22 and the cells 111. Exemplarily, at each connection point of the busbar 22to the cells 111, the busbar 22 is connected to the corresponding cell 111 by laser welding.

In some examples, the first insulating film 24 is made of a PET blue film.

In some examples, the second insulating film 25 is made of a PET blue film.

The PET blue film is a transparent plastic film with excellent gloss, and its high transparency facilitates the quality control of the welding and assembly in the process of the busbar assembly 200. Besides, the PET blue film also has good stiffness, strength, and high ductility, wherein the high ductility is conducive to the absorption of the deformation brought about by the expansion of the cells, and also facilitates the consolidation of the busbar 22 and the FPC 23 into a single unit by hot pressing. Moreover, the PET blue film is also puncture-resistant, friction-resistant, heat-resistant, and resistant to ultra-low temperatures, thus enabling the final battery module to have a long service life.

In some embodiments, as shown in FIG. 1, the battery module 1000 further includes the support assembly 300, the support assembly being configured to secure the busbar assembly 200 described above.

As shown in FIGS. 2-3, the support assembly 300 includes at least one support 11, and the busbar assembly 200 is provided on the support 11.

In some examples, based on the fact that the busbar assembly 200 has an integral configuration achieved by consolidating the first insulating film 24, the busbar 22, the FPC 23, and the second insulating film 25 through hot pressing, the first insulating film 24, the second insulating film 25, and the support 11 are provided with positioning holes at corresponding positions so as to facilitate fixing of the busbar assembly 200 on the support 11.

In some examples, the FR4 reinforcement plate is provided at one end of the FPC 23, and the support 11 is provided with a corresponding mounting recess. After the busbar assembly 200 is mounted on the support 11, the FR4 reinforcement plate may be bonded to the one end of the FPC 23 such that the FR4 reinforcement plate is disposed in the corresponding mounting recess, and then the FR4 reinforcement plate may be secured in the mounting recess by means of a fixing mechanism such as a rivet fastener.

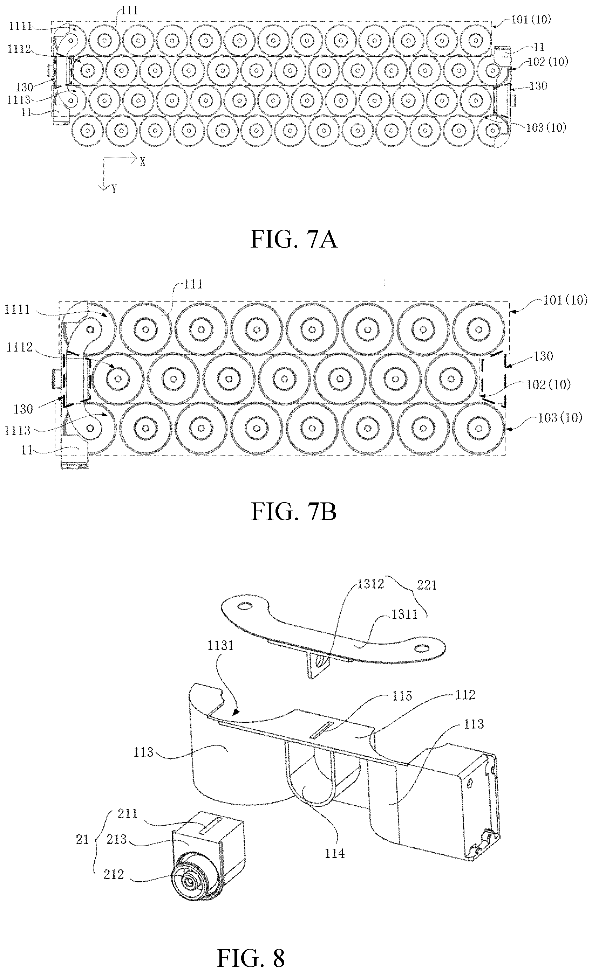

In some embodiments, as shown in FIGS. 2 and 7A, in all the cell rows 10, three adjacent cell rows 10 form a cell row group that has the holding space 130 at at least one end of the cell row group in the first direction X, with the aforementioned support 11 being at least partially disposed within the holding space 130.

Such arrangement makes the holding space 130 of the cell assembly 100 be utilized by the support 11, avoiding the problem of the support 11 occupying other space and making the overall volume of the battery module too large. In addition, the support 11 is not only adaptive to the holding space and play a better positioning role, thereby facilitating the connection between the busbar 22 and the cell assembly 100; but also the support 11 can provide a good support for the busbar assembly 200, which is conducive to the grab for and placement of the busbar assembly.

Exemplarily, the support 11 may be partially disposed in the holding space 130 or may be wholly disposed in the holding space 130, which may be arranged according to practical needs.

In some embodiments, as shown in FIGS. 2 and 7A, a cell row group (i.e., the three adjacent cell rows 10) includes the first cell row101, the second cell row 102, and the third cell row 103. The first cell row 101, the second cell row 102, and the third cell row 103 have, at one of their ends in the first direction X, respectively, the first cell 1111, the second cell 1112, and the third cell 1113. That is, in the first direction X, the first cell row 101 comprises the first cell 1111 located at one of its ends, the second cell row 102 comprises the second cell 1112 located at one of its ends, and the third cell row 103 comprises the third cell 1113 located at one of its end; and the first cell 1111, the second cell 1112, and the third cell 1113 are located at the same ends (for example, the above-mentioned first ends, or the second ends) of the three adjacent cell rows 10.

Referring to FIG. 7A, the second cell 1112 is closer to the inner portion of the battery module compared to the cells 1111 and 1113 in the first cell row 101 and the third cell row 103, such that the aforementioned holding space 130 is formed between the first cell 1111, the second cell 1112, and the third cell 1113.

Such arrangement makes the holding space at the outer periphery of the cell assembly 100 be utilized by the support 11, avoiding the problem of the support 11 occupying other space and making the overall volume of the battery module too large, thereby effectively saving the overall space occupation of the battery module. At the same time, the support 11 can not only adaptive to the holding space and play a better positioning role, thereby facilitating the connection between the busbar 22 and the cell assembly 100, but also provide a good support for the busbar assembly 200, which is conducive to the grab for and placement of the busbar assembly.

In some embodiments, as shown in FIG. 7A, the cell assembly 100 has holding spaces 130 at both ends in the first direction X.

In some examples, the above-described cell row group has a holding space 130 at one end in the first direction X. The cell assembly 100 includes at least four cell rows 10, wherein the four adjacent cell rows 10 have two holding spaces 130 in the first direction X, and the two holding spaces 130 are located at two ends of the four adjacent cell rows 10. Exemplarily, in the four adjacent cell rows 10, three of the four adjacent cell rows 10 have one holding space 130 at one end in the first direction X, and the other three adjacent cell rows 10 have one holding space 130 at the other end in the first direction X.

In this case, two support 11 are provided, each of the two supports 11 being at least partially located within the two aforementioned holding spaces 130.

In the above arrangement, the two supports 11 are located at the two ends of the cell assembly 100, and the busbar assembly 200 can be fixed to the two supports 11, and when the two supports 11 are placed in the two holding spaces 130 respectively, a rapid alignment can be made between the busbar 22 in the busbar assembly 200 and the cell assembly 100, thereby facilitating the subsequent connection between the busbar 22 and the cell assembly 100. In addition, the use of the two supports 11 can form a stable support for the busbar assembly 200, and at the same time the two supports 11 are accommodated in the two holding spaces, which can make the overall structure more compact and more stable.

In some embodiments, as shown in FIG. 7B, the difference between the numbers of the cells 111 in any two adjacent cell rows 10 is not equal to 0, i.e., the numbers of the cells in the two adjacent cell rows 10 are not equal. Exemplarily, a cell row group has a holding space 130 at each end of the cell row group in the first direction X. The support assembly 300, includes two supports 11 (only one support 11 is shown in FIG. 7B), which are at least partially disposed within the two holding spaces 130, respectively.

In this way, the two supports 11 are located at the two ends of the cell assembly 100, and the busbar assembly 200 can be fixed to the two supports 11, and when the two supports 11 are placed in the two holding spaces 130 respectively, a rapid alignment may be formed between the busbar 22 and the cell assembly 100, so as to facilitate the subsequent connection between the busbar 22 and the cell assembly 100. In addition, the above structure can also fully utilize the holding space 130, and make the overall structure of the battery module relatively regular, effectively saving the space around the cell assembly 100.

In some embodiments, as shown in FIGS. 7A and 8, the support 11 includes a connecting portion 112 and a limiting portion 113 disposed on at least one side of the connecting portion 112, the output terminal connector 21 is disposed on the connecting portion 112, the limiting portion 113 is provided with a recess 1131 on the side close to the cell assembly 100, and at least one of the first cell 1111 and the third cell 1113 is disposed within the recess 1131.

The recess 1131 and the cell 111 (the first cell 1111 or the third cell 1113) that can be accommodated therein facilitate further positioning between the support 11 and the cell assembly 100, thereby facilitating the alignment and connection between the busbar 22 and the cell assembly 100. In addition, the connecting portion 112 and the limiting portion 113 in the support 11 are respectively adapted to two cells 111 (e.g., the first cell 1111 and the second cell 1112) arranged adjacent to each other in a staggered arrangement, and the recess 1131 of the limiting portion 113 is capable of accommodating the first cell 1111, while the holding space 130 between the two cells 111 is capable of accommodating the connecting portion 112, and such staggered form makes the overall support 11 to be better positioned with respect to the cell assembly 100, thus more conducive to the connection between the busbar 22 and the cell assembly 100. In addition, the connecting portion 112 is located in the holding space 130, thereby fully utilizing the holding space 130 and avoiding the problem of the connecting portion 112 being located in other space and causing the overall volume of the battery module to be too large.

In some embodiments, as shown in FIGS. 7A and 8, the limiting portions 113 are located on both sides of the connecting portion 112, and the limiting portions 113 are provided with two recesses 1131 on the side close to the cell assembly 100, and the first cell 1111 and the third cell 1113 are located in the two recesses 1131, respectively. In this way, by limiting the first cell 1111 and the third cell 1113 respectively through the two recesses 1131, it is possible to make the support 11 have a better positioning effect. At the same time, the limiting portions 113 are provided on both sides of the connecting portion 112, which also makes the support 11 more stable, thereby improving the stability of the battery module.

In some embodiments, as shown in FIGS. 7A and 8, the inner sidewall of the limiting portion 113 located at the recess location is configured to abut against the cell 111. That is, the recess 1131 is profiled so as to better accommodate the cell 111 (e.g., the first cell 1111 or the third cell 1113), thereby improving the assembly stability between the support 11 and the cell 111. In addition, this is also conducive to positioning between the support 11 and the cell 111, thereby enabling easy and accurate alignment between the busbar assembly 200 fixed to the support assembly 300 and the cell assembly 100, thereby improving the assembly yield between the busbar 22 of the busbar assembly 200 and the cell assembly 100.

In some examples, the limiting portion 113 covers a portion of the cell 111 in the length direction of the cell 111. Exemplarily, the limiting portion 113 covers half of the cell 111 in the length direction of the cell 111, which facilitates saving the material of the support 11, and at the same time helps dissipate the heat of the cell 111 during operation.

In some embodiments, as shown in FIGS. 7A and 8, the busbar assembly 200 includes an output terminal connector 21 (e.g., a high-voltage output terminal connector), the output terminal connector 21 is provided on the connecting portion 112, the output terminal connector 21 is connected to a third connecting member, which is one of the first connecting member 221 and the second connecting member 222, and the output terminal connector 21 is provided on the support 11. Utilizing the output terminal connector 21, it is possible to make the battery module continuously supply power to the electric device.

In some embodiments, as shown in FIGS. 7A and 8, the connecting portion 112 is provided with a cavity 114 on a side away from the cell assembly 100, the cavity 114 is located in the holding space 130, and the output terminal connector 21 is located in the cavity 114. Such arrangement makes the output terminal connector 21 to be at least partially located in the holding space 130, thereby effectively saving the space occupied by the battery module, and the structure of the formed battery module is compact and neat, facilitating subsequent placement and use of the battery module. On the other hand, the cavity 114 also facilitates fixing the output terminal connector 21, thereby facilitating the arrangement of the high voltage cable.

In some embodiments, as shown in FIGS. 7A and 8, the connecting portion 112 is provided with an opening 115 in communication with the cavity 114 at a side close to the busbar assembly 200 (e.g., the busbar 22), the output terminal connector 21 is provided with a slot 211 at a position facing toward the opening 115, and the third connecting member (i.e., both the first connecting member and the second connecting member, respectively) includes the connector tab 1311 and the terminal tab 1312, wherein the connector tab 1311 is electrically connected to its corresponding output terminal (e.g., a positive output terminal), and the terminal tab 1312 is inserted into the slot 211 through the opening 115 and is electrically connected to the output connector 21.

In the specific connection process of the third connecting member and the output terminal connector 21, the output terminal connector 21 is first placed in the cavity 114 with its slot 211 being opposite to the opening 115 of the connecting portion 112; then the terminal tab 1312 of the third connecting member is inserted into the slot 211, thereby realizing the connection between the output terminal connector 21 and the third connecting member; and after that the connector tab 1311 is connected to the corresponding output terminal (positive output terminal or negative output terminal), thereby finalizing the electrical connection between the output connector 21 and the corresponding output terminal.

By inserting the terminal tab into the slot 211, not only can the electrical connection between the third connecting member and the output connector 21 be realized, but also the quick fixation between the third connecting member and the output connector 21 can be realized. The above-described method makes the overall connection stable and good, and the connection is very convenient, and it is also convenient to disassemble the third connecting member and the output connector 21.

In some examples, the connector tab 1311 and the terminal tab 1312 are substantially perpendicular to each other so that the connector tab 1311 will not be affected during insertion of the terminal tab 1312 into the slot 211, thereby ensuring the overall stability of the third connecting member.

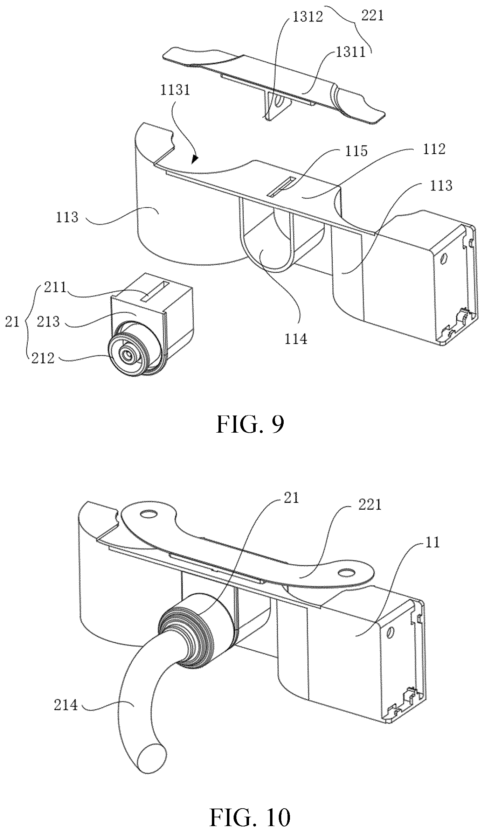

In some examples, as shown in FIG. 8, in the case where the third connecting member connects the positive electrodes of the two or more cells, the connector tab 1311 may be U-shaped, i.e., the connector tab 1311 have bent portions at both ends, and the bent portions each have a positioning hole at the end portion, so as to facilitate the connection of the connector tab 1311 to the positive electrodes of the cells. As shown in FIG. 9, in the case where the third connector tab connects the negative electrodes of two or more cells, the connector tab 1311 may be linear.

In some examples, the terminal tab 1312 includes a welding portion as well as an inserting portion, the welding portion is substantially perpendicular to the inserting portion, and the welding portion is set parallel to the connector tab 1311, which can make it more convenient to weld the terminal tab 1312 to the connector tab 1311 and provide better stability of the connection.

In some embodiments, the connector tab is an aluminum sheet, and the aluminum sheet has good electrical and thermal conductivity and can be well welded to the output terminals of the cells 111.

Exemplarily, the connector tab 1311 may be made of AL1060-O state aluminum, which has good electrical and thermal conductivity as well as corrosion resistance, and has good deformability, and can be easily machined into structures of various shapes and sizes, and is easily welded to the output terminals of the cells. Exemplarily, the thickness of the connector tab is 0.5 mm.

In some embodiments, the terminal tab 1312 is a copper sheet, which has a high electrical conductivity and a high hardness, which facilitates multiple insertions of the terminal tab 1312 into the slot 211 and the electrical connection with the output connector 21.

In some embodiments, as shown in FIG. 10, the output terminal of the output terminal connector 21 is electrically connected to the high-voltage cable 214, and the high-voltage cable has the advantages of taking up less space, flexible wiring, and easy to use, and at the same time, it is less likely subject to the climatic conditions and the surrounding environment, and the transmission performance is stable. The insulating coating of the cable has the characteristics of fireproof and waterproof, being abrasion-resistant, and resistant to high and low temperatures and so on, and is therefore applicable to a wide range. It is very suitable for the working environment of battery module.

Exemplarily, the terminal tab is made of T2-Y2 copper, which is a high-purity copper material with good electrical and thermal conductivity as well as processability, and which facilitates the electrical conductivity and heat dissipation of the third connector. Exemplarily, the thickness of the terminal tab is 1.5 mm.

Between the positive output terminal connected to the first connecting member 221 and the negative output terminal connected to the second connecting member 222, the following positional relationship may exist.

In some examples, referring to FIG. 2, in the three adjacent cell rows 10 described above (i.e., the first cell row 101, the second cell row 102, and the third cell row 103), the negative electrode of the first cell 1111 and the negative electrode of the third cell 1113 may collectively serve as the negative output terminal, while the positive electrode of the fourth cell 1115 located at the other end of the second cell row 10 along the first direction X may serve as the positive output terminal; alternatively, the positive electrode of the first cell 1111 and the positive electrode of the third cell 1113 may together serve as the positive output terminal, while the negative electrode of the fourth cell 1115 may serve as the negative output terminal.

In some examples, please continue to refer to FIG. 2, in addition to the three adjacent cell rows 10 described above, the cell assembly 100 may include the fourth cell row 104 disposed on the side of the third cell row 103 away from the first cell row 101, the fourth cell row 104 being disposed such that the fourth cell row 104 and the third cell row 103 are staggered (i.e., the cells in the rows 104 and 103 are positioned in an offset manner) but the fourth cell row 104 and the second cell row 102 are not staggered (i.e., the cells in the rows 104 and 102 are aligned). In this case, the fourth cell row 104 has the fifth cell 1116 at one end of the fourth cell row 104 in the first direction X. A line between the fifth cell 1116 and the fourth cell 1115 is parallel to a line between the first cell 1111 and the third cell 1113. When the positive electrode of the first cell 1111 and the positive electrode of the third cell 1113 are used together as a positive output terminal, the negative electrode of the fourth cell 1115 and the negative electrode of the fifth cell 1116 may be used together as a negative output terminal; alternatively, when the negative electrode of the first cell 1111 and the negative electrode of the third cell 1113 are used together as a negative output terminal, the positive electrode of the fourth cell 1115 and the positive electrode of the fifth cell 1116 may jointly serve as the positive output terminal.

It should be noted that the above examples are only optional ways of setting the positive output terminal and the negative output terminal, and the present disclosure does not limit thereto.

In some embodiments, the present disclosure also provides an electric device that includes the above-described battery module 1000. The electric device may be a vehicle (e.g., a supercar), a portable device, a laptop computer, a ship, a spacecraft, and an electric toy, among others. The vehicle may be a fuel vehicle, a gas vehicle, or a new energy vehicle, and the new energy vehicle may be a pure electric vehicle, a hybrid vehicle, or a programmable vehicle, etc.; the spacecraft includes an airplane, a rocket, a space shuttle, a spacecraft, and the like; and the electric toys include stationary or movable electric toys, such as, for example, game consoles, electric car toys, electric boat toys, and electric airplane toys, and the like. The embodiments of the present disclosure do not impose special limitations on the above-mentioned electric devices. In the case of a vehicle, for example, the vehicle may also include a controller and a motor, the controller being used to control the power battery to supply power to the motor, e.g., for starting, navigating, and driving the vehicle with working power requirements.

Due to the inclusion of the battery module 1000, the electric device provided by the present disclosure is capable of achieving all of the technical effects of the battery module 1000 described above, which will not be repeated herein.

The above provides a detailed introduction to the embodiment of the present invention, in which specific examples are applied to expound the principles and implementation methods of the invention. The description of the embodiment is only for the purpose of helping to understand the method and core ideas of the invention; at the same time, for those skilled in the art, based on the ideas of the invention, there will be changes in the specific implementation methods and scope of application. In summary, the content of this disclosure should not be understood as a limitation of the invention.

## Claims

1. A battery module comprising:
a cell assembly (100) having a positive output terminal and a negative output terminal, the cell assembly comprising at least three cell rows (10) parallel to each other, each of the cell rows (10) comprising a plurality of cells (111) arranged along a first direction (X), any two adjacent ones of the at least three cell rows (10) are staggered, and each of the cells (111) comprising two electrodes (120) of opposite polarities; and
a busbar (22) electrically connected to the two electrodes (120) of each of the cells (111) of the at least three cell rows (10), the busbar (22) comprising: a first connecting member (221), a second connecting member (222), and a plurality of first conductive bars (201) and a plurality of second conductive bars (202) disposed between the first connecting member (221) and the second connecting member (222), the first connecting member (221) being connected to the positive output terminal, the second connecting member (222) being connected to the negative output terminal, the plurality of first conductive bars (201) and the plurality of second conductive bars (202) being arranged side-by-side along the first direction (X) respectively, and the plurality of first conductive bars (201) and the plurality of second conductive bars (202) alternating with each other; wherein each of the first conductive bars (201) and the second conductive bars (202) comprises at least three conductive units (220) disposed along a second direction (Y) and a connector (223) connecting the at least three conductive units (220), each of the conductive units (220) corresponds to one of the cells (111), and the second direction (Y) is perpendicular to the first direction (X); in the at least three conductive units (220) of each of the first and second conductive bars (201, 202), two adjacent ones of the conductive units (220) correspond to two of the cells (111) and connect two of the electrodes (120) of the two cells (111) which are of opposite polarities, and two spaced ones of the conductive units (220) correspond to two of the cells (111) and connect two electrodes (120) of the two cells (111) which are of the same polarity;
**characterized in that** one of the electrodes (120) of each cell (111) is connected to a first conductive mechanism, and another electrode (120) of the cell (111) is connected to a second conductive mechanism, and the first conductive mechanism and the second conductive mechanism for the cell (111) are any two adjacent ones of the first connecting member (221), the second connecting member (222), the plurality of first conductive bars (201), and the plurality of second conductive bars (202).

2. The battery module according to claim 1, **characterized in that** the at least three cell rows (10) comprise a first number of cell rows (10), the at least three conductive units (220) comprise the first number of conductive units (220), the first number being an even number greater than 3.

3. The battery module according to claim 1, **characterized in that characterized in that** in each of the first and second conductive bars (201, 202), the connector (223) comprises a plurality of sub-connectors (2230), each of which is disposed between two adjacent ones of the conductive units (220); the sub-connectors (2230) each comprising two opposite connecting edges (2020), each of the connecting edges (2020) having two ends connected to the two adjacent conductive units (220) respectively, the two connecting edges (2020) being disposed to recess towards each other.

4. The battery module according to claim 3, **characterized in that** each of the connecting edges (2020) has a curved shape.

5. The battery module according to claim 3, **characterized in that** each of the sub-connectors (2230) is further provided with a fusing structure (204).

6. The battery module according to any one of claims 1-5, further comprising a support assembly (300), the support assembly (300) being configured to hold the busbar (22), the support assembly (300) comprising at least one support (11), the busbar (22) being provided on the support (11); at least three adjacent ones of the cell rows (10) forming a cell row group, at least one end of the cell row group in the first direction (X) having a holding space (130), the support (11) being at least partially disposed within the holding space (130).

7. The battery module according to claim 6, **characterized in that** the cell row group comprises a first cell row (101), a second cell row (102), and a third cell row (103), the first cell row (101), the second cell row (102), and the third cell row (103) having a first cell (1111), a second cell (1112), and a third cell (1113), respectively, at the end of the cell row group in the first direction (X); the second cell (1112) being closer to an inner portion of the cell row group compared to the first cell (1111) and the third cell (1113) to form the holding space (130) between the first cell (1111), the second cell (1112), and the third cell (1113).

8. The battery module according to claim 7, **characterized in that** the support (11) comprises a connecting portion (112) and a limiting portion (113) disposed on at least one side of the connecting portion (112), the limiting portion (113) being provided with a recess (1131) on a side close to the cell assembly (100), and wherein at least one of the first cell (1111) and the third cell (1113) is located in the recess (1131).

9. The battery module according to claim 8, **characterized in that** the limiting portion (113) is located on both sides of the connecting portion (112), and the limiting portion (113) is provided with two recesses (1131) on the side close to the cell assembly (100), and wherein the first cell (1111) and the third cell (1113) are located in the two recesses (1131) respectively.

10. The battery module according to claim 8, further comprising an output terminal connector (21), **characterized in that** the output terminal connector (21) is provided on the connecting portion (112), and wherein the output terminal connector (21) is connected to a third connecting member, the third connecting member being one of the first connecting member (221) and the second connecting member (222).

11. The battery module according to claim 10, **characterized in that** the connecting portion (112) is provided with a cavity (114) on a side away from the cell assembly (100), the cavity (114) being located in the holding space (130), and the output terminal connector (21) being located in the cavity (114).

12. The battery module according to claim 11, **characterized in that** the connecting portion (112) is provided with an opening (115) at a side close to the busbar (22) in communication with the cavity (114), the output terminal connector (21) is provided with a slot (211) at a position facing towards the opening (115), the third connecting member comprises a terminal tab (1312), the terminal tab (1312) is inserted into the slot (211) through the opening (115) and is electrically connected to the output terminal connector (21).

13. The battery module according to claim 12, **characterized in that** the third connecting member further comprises a connector tab (1311) connected to the terminal tab (1312), the connector tab (1311) being electrically connected to the positive output terminal; wherein,
a material of the connector tab (1311) is aluminum; and/or a material of the terminal tab (1312) is copper.

14. The battery module according to claim 13, **characterized in that** the material of the connecting tab (1311) is AL1060-O state aluminum; and/or
the material of the terminal tab (1312) is T2-Y2 copper.

15. The battery module according to claim 6, **characterized in that** the cell row group has two holding space (130) at two ends in the first direction (X), respectively; the at least three cell rows (10) comprises at least four cell rows (10) in which four adjacent cell rows (10) have the two holding spaces (130) in the first direction (X); the at least one support (11) comprising two supports (11), the two supports (11) being located at least partially within the two holding spaces (130), respectively.
